Europäisches Patentamt

**European Patent Office**

**Office européen des brevets**

(11) Publication number: **0014019**
A1

# EUROPEAN PATENT APPLICATION

(21) Application number: **80200058.8**

(22) Date of filing: **22.01.80**

(51) Int. Cl.³: **H 04 N 5/197, H 04 N 5/34**

(30) Priority: **26.01.79 US 6610**

(43) Date of publication of application: **06.08.80**
**Bulletin 80/16**

(84) Designated Contracting States: **DE FR GB IT NL**

(71) Applicant: **North American Philips Corporation, 100 East 42nd Street 9th Floor, New York, N.Y. 10017 (US)**

(72) Inventor: **Safar, Johann, c/o INT. OCTROOIBUREAU B.V. Prof. Holstlaan 6, NL-5656 AA Eindhoven (NL)**

(74) Representative: **Steenken, Jacob Eduard et al, INTERNATIONAL OCTROOIBUREAU B.V. Prof. Holstlaan 6, NL-5656 AA Eindhoven (NL)**

(54) **Dynamic beam current control circuit for use with a television camera tube.**

(57) A dynamic beam current control circuit for a television camera tube (10) features a threshold circuit (24) so that the correction is effected only for a large light intensities impinging on the television camera tube (10) and a non-linear circuit (26) which has a characteristic which is in the inverse of the control electrode voltage versus beam current characteristic of the camera tube (10). This combination provides a stable feedback loop.

0014019

Dynamic beam current control circuit for use with a
television camera tube.

The present invention relates to a dynamic beam current
control circuit for use with a television camera tube, said circuit
comprising a threshold detector having an input means coupled to
receive a signal from the target electrode of said camera tube, and
an output means coupled to an electrode of said camera tube for
providing an output control signal when the input signal exceeds a
predetermined value, said circuit further comprising a non-linear
processing circuit coupled between said threshold detector output
means and said electrode that receives said output control signal.

A television camera tube has a target which is illuminated
by the scene that is viewed by the camera tube. The intensity of
the light falling on the target causes an electrical discharge of
it. An electron beam sweeps across the target and recharges it to a
fixed value. The current that is required to recharge the target
plate is proportional to the intensity of the light falling upon
the target plate. If the camera tube is viewing a very intense
object, the electron beam current may not be sufficient to totally
recharge the target plate. This especially occurs when the camera
and the viewed object are moving with respect to another. It causes
a visible effect known as "comet tail", which trails a brightly
illuminated spot when said motion occurs.

The beam current which flows in the camera tube is a
function of the voltage applied to its control electrode. This
current traditionally has been a compromise between minimizing a
comet tail effect, which requires a large current, and high
resolution, which requires a low beam current. If the voltage on
the control electrode can vary with the signal current created by
the optical image, then the beam current can temporarily and
automatically be increased to accommodate local areas of excess
light. This technique has been named "dynamic beam current
control".

A camera provided with such a control circuit is described as prior art camera in United States Patent No. 3999011. It is described that the picture signal generated by the pick-up tube is subjected to the following processes in the control circuit: the picture signal is first amplified, thereafter a black level in the picture signal is clamped on a reference level by means of a clamping circuit and then that signal portion which exceeds a nominal peakwhite value is separated from the picture signal and, via a low-pass filter in which the smoothed signal is superimposed on a d.c. voltage for adjustment, applied to the control electrode of the electron gun in the pick-up tube.

It is described that a drawback of the prior art camera is that oscillations can and will in practice frequently occur owing to the feedback. As regards the cause or possible several causes, respectively, of the oscillations it is remarked that an exact indication cannot be given. Finally the described camera is said to be highly instable and unsuitable for practice.

It is an object of the invention to provide a camera, comprising a control circuit for the beam current control in which no oscillations caused by this control occur. A practically properly operating camera according to the invention comprises a control circuit which is characterized in that said non-linear processing circuit has an input-output characteristic that is the inverse of the control electrode voltage versus beam current characteristic of said camera tube.

Essential is the use of the non-linear circuit in the dynamic beam current control circuit to correct for the non-linear voltage versus current characteristic of the camera tube. This provides for a stable feedback loop.

The invention will be further explained by way of non-limitative example with reference to the accompanying Figures in which:

Fig. 1 shows a block diagram of a circuit in accordance with the invention; and

Fig. 2 shows a schematic diagram of some details of the blocks of Fig. 1.

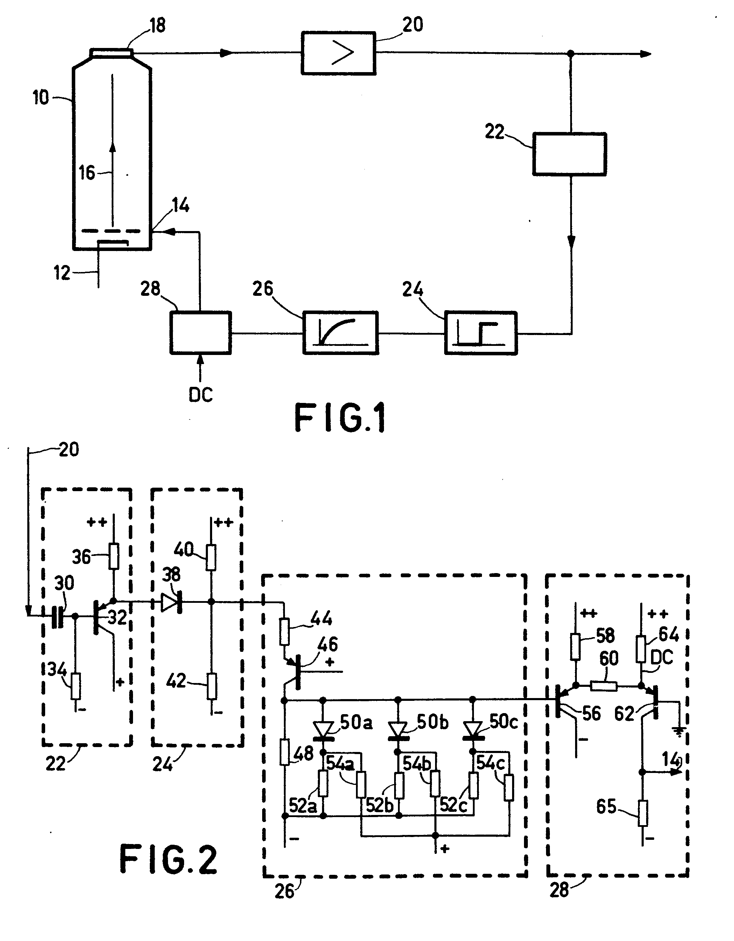

Fig. 1 shows a camera tube 10 which has an electron emitting cathode 12. The cathode current is controlled by a control electrode 14. Typically the control voltage on the control electrode 14 versus the cathode current from cathode electrode 12 is square law, i.e. a doubling of the voltage on the control electrode 14 causes a quadrupling of the current from cathode 12. The electron beam 16 impinges upon the inwards facing side of a signal or target electrode 18. The other side of the target 18 receives light from a viewed scene (not shown). The light causes a discharge of the charge stored across target 18 in accordance with the strength of the light falling on a particular point of target 18. The electron beam 16 is swept across target 18 by deflection coils and circuitry (not shown). It recharges the inside of target 18 up to a selected value in accordance with the beam current. The amount of the signal current coming from target 18 is coupled to the preamplifier 20 where it is amplified and then applied to the remainder of the video circuits within the camera. When a very intense light falls upon the target 18, beam current 16 would normally be insufficient to completely recharge the target 18, thus giving rise to the comet tail effect.

To overcome this problem, the output of camera preamplifier 20 is coupled to an interface circuit 22, which is a simple D.C. restoration device. In turn, the output of circuit 22 is coupled to a threshold detector 24, which provides an output signal only when its input signal exceeds 100 units of video. Thus, if the input signal equals 150 units, the output signal from threshold detector 24 would be 50 units. A non-linear processing circuit 26 is coupled to the threshold detector 24. Typically the circuit 26 has a square root law characteristic to compensate for the square law characteristic of camera tube 10. However other characteristics can be used depending upon the characteristic of camera tube 10. In general it is desired to have the inverse of the characteristic of the camera tube for the characteristic of circuit 26. The output of processor 26 is coupled to another interface circuit 28 where the video signal is combined with a D.C. bias current (DC) to set the beam current 16 within tube 10. The output of the interface circuit 28 is in turn coupled to the control electrode 14. If desired interface circuit 28 can be coupled to cathode 12.

In operation, it will be seen that ghost images due to crosstalk are eliminated by the use of the threshold  circuit 24
and the processing circuit 26. The circuit 24 prevents the
application of the beam current control signal to the control
electrode 14 until an excessive light in the image cause the signal
to exceed a preselected threshold value. This value is selected
such that the light intensity required to make normal
television pictures will be less than the threshold value. Until
the video signal reaches this value, the control electrode of the
tube 10 receives only a D.C. bias voltage applied by interface
circuit 28. Further it is essential that the tendency towards
instability  is significantly reduced by using the described
non-linear processing circuit 26 within the circuit.

          Fig. 2 shows a schematic diagram of some of the details of
the circuits of Fig. 1. The output of the preamplifier 20 is
coupled through a capacitor 30 to the base of an emitter follower
transistor 32. The base of transistor 32 is biassed by a resistor
34  coupled to a source of negative voltage (not shown).
A resistor 36 is coupled to a source of positive potential (not
shown) and biases the emitter of transistor 32.  The collector of
transistor 32 is coupled to another source of positive voltage (not
shown), and since the previous two bias sources both bias
transistor 32 to operate in saturation, the bias at the collector
of said transistor determines the D.C. restoration point for the
peak black level for positive going video. The threshold detector
24 comprises a diode 38 that receives at its anode the output of
transistor 32 and has its cathode coupled to biassing resistors 40
and 42 respectively coupled to positive and negative voltage
sources (not shown).  The resistors 40 and 42 form a resistive
divider that back biases the diode 38, so that only a signal
greater than this back bias on the diode 38, which is set at the
level required to produce a normal television picture, is fed to
the non-linear processing circuit 26. If desired resistors 40 and
42  can be replaced by a variable potentiometer. The non-linear
processing circuit 26, which is essentially the same as a gamma
correction circuit, receives its signal through a resistor 44,
which applies it to the emitter of a common base transistor 46. At
the base of transistor 46 a positive bias voltage is applied.

The collector of transistor 46 goes to a collector load resistor 48, which in turn goes to a negative voltage source (not shown). A plurality of diode resistive load networks are connected in parallel with load resistor 48. They comprise diodes 50a, 50b, 50c, and resistors 42a, 52b, and 52c , connected in series with the diodes 50 respectively. Biassing resistors 54a, 54b, and 54c, are coupled to the junctions of diodes 50 and resistors 52 respectively. The other ends of the resistors 54 are coupled to a source of positive potential. They bias each of the diodes 50 at a different point, so that as the input signal becomes stronger, more of the diodes 50 start conducting, thus placing more of the resistors 52 in parallel with the load resistor 48, and thereby reducing the total effective collector load. This causes the non-linear characteristic that is desired for this processing circuit 26. The interface circuit 28 comprises an emitter follower transistor 56 having a bias resistor 58 coupled to its emitter and a source of negative potential (not shown) coupled to its collector. A resistor 60 applies the signal from the emitter of transistor 56 to the emitter of a transistor 62 operating in a grounded base configuration. A resistor 64 is coupled to a source of positive potential (not shown) and sets D.C. bias (DC) on transistor 62, which in turn sets the beam current of tube 10. The collector of transistor 62 is coupled to a load resistor 65, which in turn is coupled to a source of negative potential (not shown). The junction of transistor 62 and resistor 65 is coupled to the control electrode 14 of the tube 10, although as previously mentioned, it can be coupled to cathode 12.

It is appreciated that many other embodiments are possible without departing from the spirit and scope of the invention.

1

0014019

PHA 20892

CLAIMS:

1.    A dynamic beam current control circuit for use with a television camera tube, said circuit comprising a threshold detector having an input means coupled to receive a signal from the target electrode of said camera tube, and an output means coupled to an electrode of said camera tube for providing an output control signal when the input signal exceeds a predetermined value, said circuit further comprising a non-linear processing circuit coupled between said threshold detector output means and said electrode that receives said output control signal, characterized in that said non-linear processing circuit (26) has an input-output characteristic that is the inverse of the control electrode voltage versus beam current characteristic of said camera tube (10).

2.    A circuit as claimed in Claim 1, characterized in that said non-linear processing circuit (26) has a square root input-output characteristic.

3.    A circuit as claimed in Claim 1 or 2 characterized in that said non-linear processing circuit (26) comprises a first resistor (48), a plurality of series circuits comprising a diode (50) and a resistor (52) coupled in parallel with said first resistor (48) and means (54) for applying bias to said series circuits (50, 52).

4.    A circuit as claimed in Claim 1, 2 or 3, characterized in that said threshold detector (24) comprises a back biassed diode (38).

5.    A circuit as claimed in Claim 1, 2, 3 or 4, characterized in that the circuit further comprises an interface circuit coupled between said non-linear processing circuit (26) and the electrode (14) that receives said output signal.

FIG.1

FIG.2

| Category | Citation of document with indication, where appropriate, of relevant passages | Relevant to claim |
|---|---|---|
| A,D | US - A - 3 999 011 (KAZUHIRO SATO)<br>* Column 1, lines 38-50 * | 1 |
| | DE - A - 1 562 273 (MARCONI)<br>* Column 2, line 61 - column 3, line 35 * | 1,5 |
| | FR - A - 1 520 697 (THOMSON)<br>* Page 4, left-hand column, line 41 - right-hand column, line 5 * | 1 |
| | US - A - 2 901 539 (MORGAN)<br>* Column 9, lines 52-58 * | 1 |
| | DE - C - 895 912 (TELEFUNKEN)<br>* Page 2, lines 1-21, 59-66 * | 1 |
| | US - A - 3 392 236 (NIELSEN)<br>* Column 2, line 33 - column 3, line 59 * | 1,5 |
| | US - A - 3 588 338 (THORPE)<br>* Column 4, lines 10-36 * | 3 |
| | GB - A - 821 673 (FERNSEH GmbH)<br>* Page 2, lines 12-18, 66-77 * | 4 |

**DOCUMENTS CONSIDERED TO BE RELEVANT**

**CLASSIFICATION OF THE APPLICATION (Int. Cl. 3)**

H 04 N 5/197
5/34

**TECHNICAL FIELDS SEARCHED (Int.Cl. 3)**

H 04 N 5/197
5/19
5/34

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 08-05-1980 | CRISTOL |

EPO Form 1503.1  06.78